# EUROPEAN PATENT APPLICATION

(11) **EP 0 821 348 A2**
(43) Date of publication of application: **28.01.1998**
(21) Application number: 97111209.9
(22) Date of filing: 03.07.1997
(51) Int. Cl.: G11B 5/31

(54) **Decoupled magnetic head**

(30) Priority: 25.07.1996 US 690316
(71) Applicant: READ-RITE CORPORATION, Milpitas California 95035 (US)
(72) Inventor: Liu, Francis H., Fremont, California 94555 (US); Rou, Shanghsien A., Fremont, California 94539 (US); Tong, Hua-Ching, San Jose, California 95120 (US); Thayamballi, Pradeep K., Fremont, California (US)
(74) Representative: Körber, Wolfhart, Dr. rer.nat.

(57) **Abstract**

A read-write magnetic head (12) includes a write transducer disposed side-by-side with a read transducer on a substrate (4). The write transducer includes an inductive coil sandwiched between first and second magnetic poles (28, 30). The read transducer comprises a read sensor disposed between first and second magnetic shields (40, 42). The first and second magnetic shields (40, 42) are electrically insulated from and substantially coplanar with the first and second magnetic poles (28, 30), respectively. The number of material layers in the magnetic head (12) is reduced as the first pole and the first shield can be fabricated simultaneously. Likewise, the second pole and the second shield can be fabricated simultaneously. With a reduced number of layers, the magnetic head (12) poses less of a step coverage problem during manufacture. Moreover, the read transducer can be fabricated prior to the inductive coil without subjecting the read transducer to the high heat process required for the curing of photoresist which surrounds the coil. There are also less thermal and magnetic interferences between the write and read transducers during normal operations.

## Description

### Field of the Invention

This invention relates to magnetic heads and in particular to magnetic heads having magnetic read elements disposed coplanar with magnetic write elements.

### Description of the Prior Art

Magnetic data storage systems typically include a magnetic recording medium, such as a magnetic disk or tape, and magnetic heads or transducers that coact with the medium to write and read data. Presently, disk drives incorporating magnetic disks are widely used for storage of data. Magnetic transducers or heads interact with the magnetic recording medium to write and read data. In the prior art, inductive heads or transducers were used for both writing and reading data. Presently, magnetoresistive (MR) sensors or MR read transducers are used for reading data recorded by inductive write heads. An MR transducer can read information on a magnetic recording medium with much narrower track widths and operates with an improved signal-to-noise ratio. Also, the output signal generated during the read process is independent of the traveling speed of the recording medium. Consequently, a higher recording density on the magnetic recording medium is made possible.

Currently, MR heads are designed with the read and write transducers merged together. Instead of using separate transducers for the data reading and writing functions in an MR magnetic head, a typical design of a merged magnetic head is to have the write transducer "piggy backed" onto the read transducer. A magnetic head with a merged design typically includes an MR sensor sandwiched between a magnetic shield layer and a first pole layer which also serves as a second shield. The MR sensor is separated from the shield and pole layer by insulating material. A second pole layer is deposited above the first pole layer with an inductive coil surrounded by insulating material between the pole layers. The two magnetic pole layers come into direct contact with each other at a back region at one end and are separated from each other by a narrow insulating layer at an opposite end to provide a transducing gap which serves as a write gap.

During the write mode, electrical current representing data is passed through the inductive coil. The current-carrying coil induces magnetic flux in the magnetic poles. The induced magnetic flux flows through the poles along the continuous magnetic path formeed by the magnetic poles, and reaches the narrow gap so that a closely adjacent moving magnetic medium registers and stores data signals representative of the magnetic flux.

During the read mode, the magnetic shield and the first pole act as magnetic shields so that only flux from the closest bit transition in the magnetic storage medium can be sensed by the MR sensor. The magnetic medium has recorded transitions that provide changes in magnetic flux which correspondingly varies the resistivity of the MR element of the read sensor. A direct electric current passing through the MR element generates a varying voltage which represents the data stored in the magnetic medium.

In an MR head with a merged design, the first pole serves dual functions as a shield for the MR sensor as well as a pole for the inductive transducer. Thus, the need for an extra shield layer and the associated necessary processing steps during manufacture are eliminated. Furthermore, with the write and read transducers separately implemented, each transducer can be designed independently. For example, the MR element can be built at a miniaturized scale, thereby allowing the magnetic head to read information on a recording medium with much narrower data track widths. The inductive write transducer can be fabricated with less turns which reduces inductance of the coil.

However, there are technical complications associated with a merged magnetic head both in processing and performance. First, fabrication of a merged magnetic head involves a large number of material layers deposited one on top of the other. In thin film product processing, production yield decreases exponentially with the number of deposited layers involved. With a substantial number of layers stacked together, production yield is reduced with a resultant increase in production cost.

The main reason for lower production yield associated with a multilayer structure fabrication is the problem of step coverage. A magnetic head comprises many layers in which the overlying layers are less orderly in surface regularity than the underlying layers. That is, the overlying layers in a multilayer structure encounter more topographical unevenness than the lower layers. As a consequence, the probability of experiencing processing defects in the overlying layers are higher. The processing defects directly affect manufacturing yield and performance reliability of the magnetic head.

In processing a merged head, the read transducer is always fabricated prior to the write transducer. The rationale behind this fabrication sequence is because the material layers constituting the read transducer, being thinner and more delicate, need to be deposited on the lower layers closer to the substrate for a flat underlying support. Accordingly, the thin layers of the read transducer experience the subsequent high temperature photoresist curing process required for making the insulations between inductive coil turns. Excessive high heat may damage the thin and delicate layers of the read transducer. This problem worsens when thinner spin-valve or multilayered GMR sensors are used. As a consequence, the overall production yield may further be compromised.

Attempts have been made to alleviate the step coverage problem. A general approach is to tightly monitor the process control in an effort to ensure the underlying layers are sufficiently free of irregularity before the deposition of the overlying layers. Stringent process controls are costly. Any relaxation in process monitoring will result in lower manufacturing yield.

Another approach is to form extensive and flat underlying layers as a base for the subsequently deposited layers. For example, prior to the formation of an inductive transducer, it is common to extend all the underlying layers, including the magnetic shield layer, beyond the perimeter of the inductive coil for the purpose of securing a level base. The drawback with this approach is that the magnetic shield layer is made of ferromagnetic material. Thus, the mutual inductance caused by the extensive magnetic shield layer impinging upon the inductive coil is significant. An inductive coil with high inductance is sluggish in response to write current and cannot function at high frequency ranges.

In addition to the above, despite the fact that the read and write transducers can be designed separately, the coupling arrangement of the read and write transducers in a conventional merged head also restrains the performance of the head during normal operations. In a merged head, the first pole assumes a dual role as a shield for the read sensor and as a pole for the inductive transducer. The read transducer is prone to pick up signal noise from two areas. First, stray magnetic flux from the first pole induced by the current during the write mode can cause magnetic domain instability in the read transducer itself, consequently causing signal noise during the read mode. Furthermore, during data writing, the inductive transducer has relatively high current which in turn generates substantial Joule heat surrounding the coil. When the write current is stopped, mismatches in thermal contraction between the adjacent dielectric material and the second pole create magnetic domain instabilities in the first pole. The magnetic domain instabilities progress into splitting or merging of the magnetic domains, which consequently manifest themselves as Barkhausen noise or popcorn noise impinging upon the read transducer during data reading. During data writing, the extensive magnetic shield contributes significant mutual inductance to the inductive coil, and consequently renders the coil sluggish in response.

Storage products are now built with ever decreasing physical sizes and increasing memory capacities. As a consequence, data tracks on magnetic recording media are registered with narrower track widths and higher linear density. For a magnetic head interacting such media, the read transducer must be capable of sensing weaker signals from the narrow recorded tracks reasonably free of noise. On the other hand, the inductive transducer must be responsive to write current to allow higher linear density data recording.

For the above reasons, there is a need to provide magnetic heads which are cost effective in manufacturing and high in operational performance.

### Summary of the Invention

An object of the invention is to provide a magnetic head having a reduced number of layers and a simplified design, thereby facilitating manufacture and realizing improved production yield.

Another object of the invention is to provide a magnetic head having read and write transducers which interfere minimally with each other during normal operations and accordingly maximize head performance.

According to the invention, a magnetic head is fabricated with at least one read transducer disposed in juxtaposition with a write transducer on a substrate. The write transducer includes an inductive coil sandwiched between first and second magnetic poles. The read transducer comprises an MR read sensor interposed between first and second magnetic shields. The first and second magnetic shields are dielectrically separated from and substantially coplanar with the first and second magnetic poles, respectively. The number of material layers in the magnetic head is reduced as the first pole and the first shield can be fabricated simultaneously. Likewise, the second pole and second shield can be fabricated simultaneously. With a reduced number of layers, the magnetic head of the invention poses less of a step coverage problem in processing. Moreover, the read and write transducers interfere less with each other during normal operations.

These and other features and advantages of the invention will be apparent to those skilled in the art from the following detailed description, taken together with the accompanying drawings, in which like reference numerals refer to like parts.

### Brief Description of the Drawings

Fig. 1 is a top elevational view of the first embodiment of the magnetic head in accordance with the invention with the protective layers removed;
Fig. 2 is a front elevational view, partly broken away, taken along line 2-2 of Fig. 1;
Fig. 3 is a front elevational view, partly broken away, of a prior art merged magnetic head viewed from the air bearing surface of the head;
Fig. 4 is a cross-sectional side view, in part, showing schematically the problem of step coverage in the processing of prior art thin film structures;
Fig. 5 is a top elevational view of a second embodiment of the magnetic head in accordance with the invention with the protective layers removed;
Fig. 6 is a front elevational view, partly broken away, taken along line 6-6 of Fig. 5;
Fig. 7 is an alternative implementationn of the magnetic head, shown in part, and made in accordance with the invention; and
Fig. 8 is another implementation of the magnetic head, shown in part, and made in accordance with the invention.

### Detailed Description of the Invention

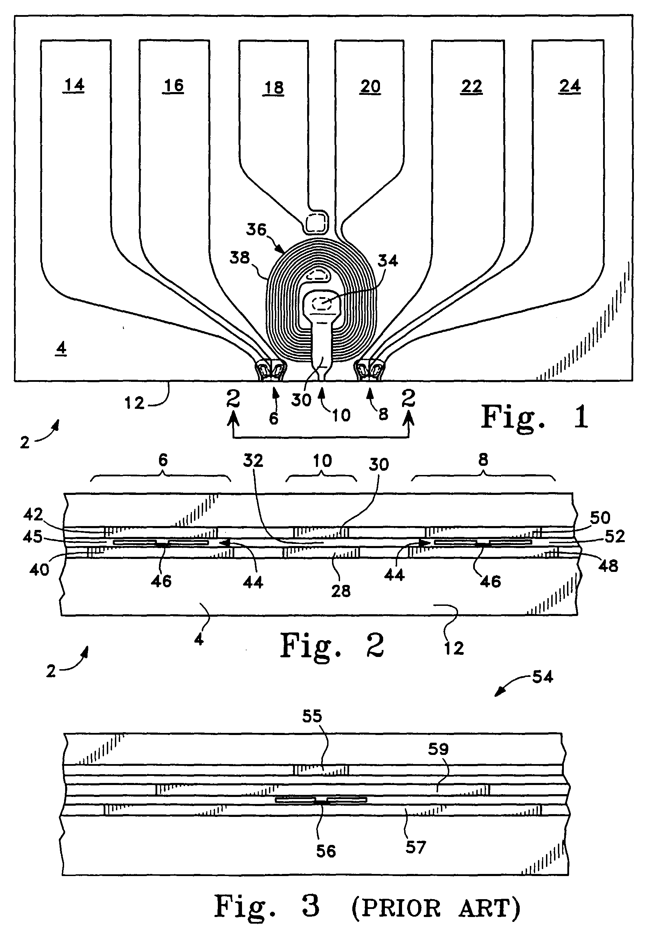

In Fig. 1, a magnetic head 12 is formed on a substrate 4, preferably made of a ceramic material that is nonmagnetic and nonconducting. For the sake of clarity in illustration, the protective and insulating layers in Fig. 1 are removed exposing all the relevant layers of the magnetic head 2. However, the protective and insulating layers are shown in Fig. 2. The magnetic head 2 includes a pair of read transducers 6 and 8, and a write transducer 10 disposed in juxtaposition and adjacent to an air bearing surface 12. Electrical leads are connected to the transducers 6, 8 and 10. Specifically, leads 14 and 16 are connected to the read transducer 6; leads 18 and 20 are connected to the write transducer 10; and leads 22 and 24 are connected to the read transducer 8.

Fig. 2 shows the positional relationships of the various layers of the magnetic head 2. A first pole 28 is formed over the substrate 4 and a second pole 30 is disposed over the first pole 28. The first pole 28 and the second pole 30 are separated at one end by an insulating gap layer 32, and are in contact at another end called a back gap region 34 (Fig. 1).
The poles 30 and 34 form a continuous magnetic path. Disposed between the first and second poles 28 and 30 is a data write means 36 which includes an inductive coil 38.

The read transducers 6 and 8 are positioned on each side of the write transducer 10. In the read transducer 6, a first shield 40 is disposed on top of the substrate 4. A second shield 42 is formed above the first shield 40 is. The rust and second shields 40 and 42 are separated by an insulating read gap layer 45. It should be noted that the insulating read gap layer 45 and the write gap layer 32 are separately deposited and may have different thicknesses. For the sake of clarity, the lines partitioning the two insulating layers 32 and 45 are not shown in the drawings. Data readout means 44 is positioned between the First shield 40 and the second shield 42. In this embodiment, data readout means 44 preferably comprises at least one MR sensor in the form of either an anisotropic magnetoresistive (AMR) sensor, or a giant magnetoresistive (GMR) sensor. In this implementation, the data readout means 44 comprises two MR elements sandwiched between and dielectrically separated from a third shield 48 and a fourth shield 50 through an insulating read gap layer 52.

In this embodiment, the first pole 28, the first shield 40 and the third shield 48 are substantially coplanar. In a similar manner, the second pole 30, the second shield 42 and the fourth shield 50 are substantially coplanar. The consequential benefit for this arrangement is multifold. First, during normal operations, the read transducers 6 and 8 are free from any interference which may be caused by the write transducer 10. As noted above, the coil 38 (Fig.1) carries a substantial amount of current during data writing. The data write current consequently generates considerable Joule heat surrounding the coil. Upon stopping the write current, mismatches in thermal contraction between the adjacent dielectric material and the poles 28 and 30 create magnetic domain instabilities in the poles 28 and 30. These magnetic domain instabilities manifest themselves as splitting or merging of the magnetic domains in the poles 28 and 30. If the MR read sensors 46 are disposed close to the poles 28 and 30, the read sensors 46 would intercept the magnetic domain instability as signal noise, and consequentially degrade the signal-to-noise ratio of the data reading capability of the transducers 6 and 8. However, with the shields positioned coplanar with the poles, as shown in Figs. 1 and 2, the mutual thermal and magnetic interferences are curtailed to a minimal degree.

The magnetic head 2 shown in Figs. 1 and 2 should be contrasted with a prior art merged head 54 illustrated in Fig. 3. The merged head 54 includes a first pole 59 dielectrically separated from a second pole 55. An inductive coil (not shown) is sandwiched between the first pole 59 and the second pole 55. There is also an MR sensor 56 sandwiched between the first pole 59 and a magnetic shield 57. In the merged head 54, The first pole 59 performs the dual functions as a pole for the coil (not shown) and as a shield for the read sensor 56. Suppose the head 54 is in operation and is switching from the write mode to the read mode. During mode switching, magnetic domain instabilities impinge upon the first pole 59, which is also the second shield of the MR sensor 56. With the mutually coupling relationship shown in Fig. 3, the second shield 59 undesirably captures the domain instabilities to the fullest extent. The read sensor 56 correspondingly senses considerable signal noise, commonly called Barkhausen noise, in addition to the sensed signal.

With reference to Figs. 1 and 2, the coplanar arrangement in which the poles 28 and 30 are decoupled from the shields 40, 42, 48 and 50, pole-to-shield interferences are minimized.

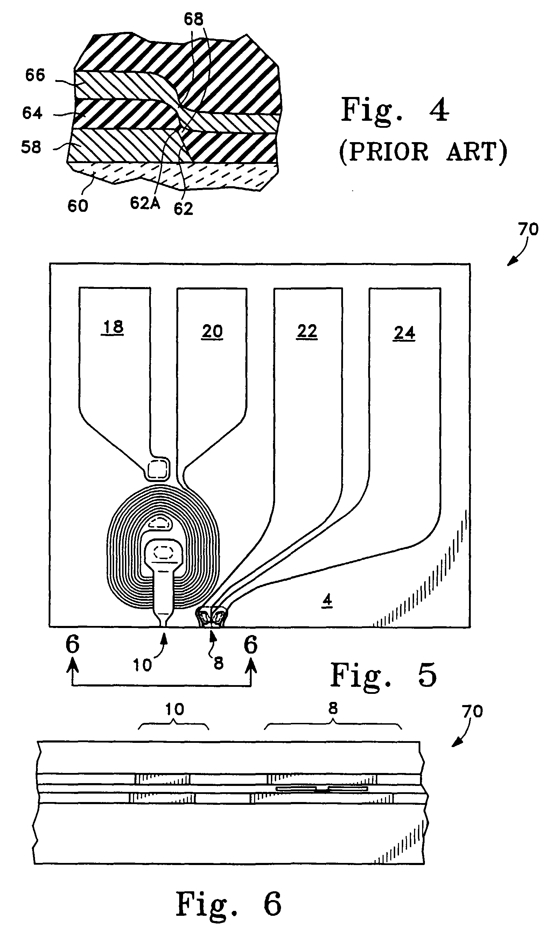

The magnetic head 2 of the invention also poses less complication in fabrication in contrast to the prior art merged head 54, shown in Fig. 3. As is well known, when producing thin film structures, the issue of step coverage always needs to be addressed. This is especially true for a multilayer structure having a large number of deposition layers. Fig. 4 illustrates the problem of step coverage commonly encountered in the prior art when producing thin film products. Suppose a metallic layer 58 is formed over a substrate layer 60 having a step 62. Then an insulating layer 64 is deposited on top of the metallic layer 58 and the substrate 60. Another metallic layer 66 is formed on the insulating layer 64. Because of the sharp edge 62A in the step 62, the overlying layers 64 and 66 have a tendency to evenly distribute the deposited material along the direction of deposition. As a consequence, areas devoid of deposited material above the step edge 62A, such as areas 68, may result. If the areas with material deficiency occurs in the metallic layer 66, there will be an open circuit. If the area devoid of material happens in the insulating layer 64, there will be an electrical short bridging the overlying and underlying layers 66 and 58. If the metallic layer 66 is one of the windings of an inductive transducer, it will be a malfunctioning transducer. The higher the layer number, the more exacerbated the problem of step coverage. Typically, there is a plurality of windings in a coil, and any electrical open or short in any winding will negatively affect the manufacturing yield and performance reliability. It is for this reason that in a multilayer structure, the underlying layers have to wide and extensive in area in order to provide a level foundation for the overlying layers.

With reference to Fig. 3, in order to provide a level foundation for the transducer (not shown) the magnetic shield 57 has to be wide and extensive. In conjunction with an extensive area, the magnetic head 57 contributes substantial mutual inductance to the coil and deleteriously affects the performance of the write function of the merged head 54.

In contrast, the transducer 10 of the magnetic head 2 of the invention shown in Figs. 1 and 2 does not have such restraint. Since the coil 38 is located at a layer closer to the substrate 4, instead of at a higher layer as in the head 54 shown in Fig. 3, step coverage is less of a problem. Consequently, there is more freedom in the dimensional design of the first pole 28 (Fig. 2). With this arrangement, the first pole 28 affects performance less as a result of mutual inductance to the coil 38. The write transducer 36 can be properly responsive to write current and is capable of operating at high frequency bandwidths.

For fabricating the magnetic head 2, conventional thin film processing techniques can be employed. For the sake of clarity and conciseness, the well-known processing techniques are not elaborated herein. It should be noted that the write coil 38 and insulations can be formed prior to the MR read sensors 46. Accordingly, the MR read sensors 46 do not experience the high heat curing process used for the photoresist which surrounds the data write coil 38. The aforementioned sequence cannot be applied to the prior art merged head 54 shown in Fig. 3. The "write-head-first" fabrication sequence of this invention also allows for several different degrees of freedom, such as trenched write heads and track width definition by the leading pole for very narrow write heads.

The embodiment described above is built with two read transducers 6 and 8. The main purpose for this arrangement is to allow the magnetic head 2, and its conjugate, to interact with a doubled-sided magnetic disk. For example, the transducer 6 for the magnetic head 2 is designated as the read transducer and reads data on a recorded track on one side of a magnetic disk. A similar magnetic head 2, mounted on the other side of the magnetic disk, may designate the transducer 8 as the read transducer to read a corresponding data track with the same track number on the other side of the disk.

Another reason for having the two transducers 6 and 8 implemented in the magnetic head 2 is improve production yield. As the MR sensors 46 are delicately deposited with various ultra- fine layers, defect occurences, if any, are more concentrated in these areas of the head 2 than any other areas. Accordingly, it is preferable to match the read transducers 6 and 8 for each coil 38. In the event that one transducer does not pass the final test, the other transducer can be utilized. A simplified example may serve as an illustration. Suppose in a production lot in which the yield is 50% and the defects occur predominantly on the read transducers. If only one read transducer is paired up with one write transducer on each die of a production wafer, 50% of the dies will have to be discarded. If two read transducers are matched with one write transducer in a manner as the magnetic head 2 shown in Figs. 1 and 2, theoretically, the final yield of accepted dies falls within the range between 50% to 100%. The actual yield would depend on the random nature of the defects. The more evenly distributed the defects, the higher will be the final yield.

If processing can be tightly monitored and accurately controlled, albeit expensive, the magnetic head 70 shown in Fig. 5 may be used in another embodiment. The magnetic head 70 is suitable for interacting with one side of the magnetic disks or tapes. As shown in Fig. 5, there is only one read transducer 8 disposed adjacent to a write transducer 10. There are only four electrical leads in the magnetic head 70. The write transducer 10 is connected to the electrical leads 18 and 20. Similarly, the read transducer 8 is connected to the electrical leads 22 and 24. Fig. 6 is an elevational view taken from the line 6-6 of Fig. 5. The structural and operational details of this embodiment is substantially similar to the previous embodiment. For reason of conciseness, they are not further repeated.

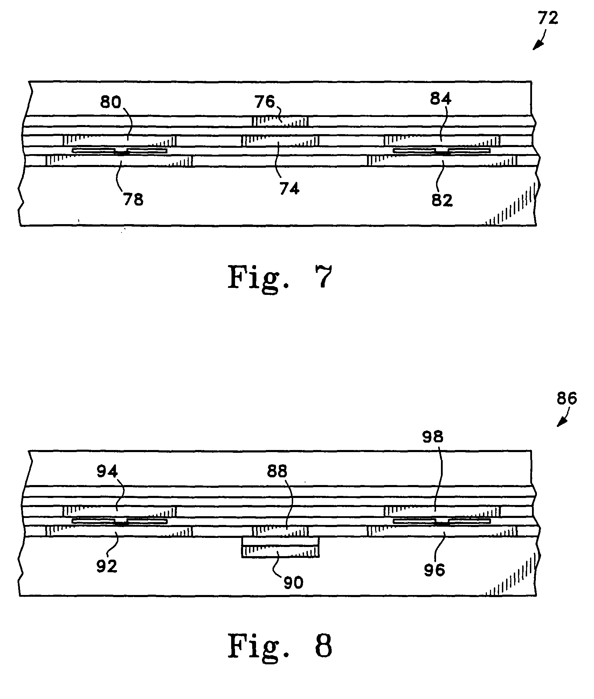

It should be noted that other embodiments of the invention may be made within the scope of the invention. For example, Fig. 7 shows an alternative version of the invention wherein a magnetic head 72 has a first pole 74 coplanar with a second shield 80 and a fourth shield 84. There is a first shield 78 disposed coplanar with a third shield 82. Fig. 8 shows yet another variation of the invention of a magnetic head 86 having a second pole 88 disposed coplanar with a first shield 92 and a third shield 96. There is a second shield 94 disposed coplanar with a fourth shield 98. Furthermore, the read transducers need not be disposed separately with one read transducer placed on one side of the write transducer. Both read transducers can be positioned on only one side of the write transducer.

## Claims

1. A thin film magnetic head (12) comprising:
a substrate (4);
first and second magnetic poles (28, 30) disposed above said substrate (4) for providing a continuous magnetic path with a transducing gap;
insulating material (32) between said first and second magnetic poles (28, 30);
write means between and electrically insulated from said first and second magnetic poles (28, 30);
first and second magnetic shields (40, 42) substantially coplanar with said first and second magnetic shields (40, 42), respectively; and
readout means (44) between and electrically insulated from said first and second magnetic shields (40, 42).

2. The thin film magnetic head (12) as set forth in claim 1 wherein said data readout means (44) comprises a magnetoresistive sensor.

3. The thin film magnetic head (12) as set forth in claim 1 or 2 including a third magnetic shield (48) and a fourth magnetic shield (50) parallel to each other, said third and fourth magnetic shields (48, 50) being substantially coplanar with said first and second magnetic poles (28, 30), respectively.

4. The thin film magnetic head (12) as set forth in claim 3 including a second magnetoresistive sensor disposed between and electrically insulated from said third and fourth magnetic shields (48, 50).

5. A thin film magnetic head (12) comprising:
a substrate (4);
first and second magnetic poles (28, 30) formed above said substrate (4) for providing a continuous magnetic path with a transducing gap;
a magnetoresisitive sensor disposed between said rust and second magnetic poles (28, 30), said magnetoresistive sensor being electrically insulated from said first and second magnetic poles (28, 30);
first and second magnetic shields (40, 42) electrically insulated from said first and second poles;
an inductive coil disposed between said first and second magnetic shields (40, 42), said inductive coil being electrically insulated from said rust and second magnetic shields (40, 42);
wherein one of said magnetic poles (28, 30) is substantially coplanar with one of said magnetic shields.

6. The thin film magnetic head (12) as set forth in claim 5 including a third magnetic shield (48) and a fourth magnetic shield (50) disposed parallel to each other, said third and fourth magnetic shields (48, 50) being substantially coplanar with said first and second magnetic shields (40, 42), respectively.

7. The thin film magnetic head (12) as set forth in claim 5 or 6 wherein said magnetoresistive sensor is an anisotropic magnetoresistive sensor.

8. The thin film magnetic head (12) as set forth in any one of claims 5 to 7 wherein said magnetoresistive sensor is a giant magnetoresistive sensor.

9. A thin film magnetic head (12) for interacting with a magnetic medium in a read mode and a write mode comprising:
a substrate (4);
first and second magnetic poles (28, 30) disposed above said substrate (4);
an inductive coil disposed between and electrically insulated from said first and second magnetic poles (28, 30);
a first magnetic shield (40) and a second magnetic shield (42);
a first magnetoresistive sensor disposed between and electrically insulated from said first and second magnetic shields (40, 42);
wherein said poles are electrically insulated from said shields, said first and second shields being substantially coplanar with said first and second poles, respectively, such that during the write mode, said shields minimally interfere with said poles inductively, and such that operating from the write mode to the read mode, magnetic flux that is generated by write current passing through said coil and which flows through said poles minimally interferes with said shields.

10. The magnetic head (12) as set forth in claim 9 including a third magnetic shield (48) and a fourth magnetic shield (50) disposed parallel to each other, and a second magnetoresistive readout sensor disposed between and electrically insulated from said third and fourth magnetic shields (48, 50), said third and fourth magnetic shields (48, 50) being substantially coplanar with said first and second magnetic poles (28, 30), respectively.

11. The magnetic head (12) as set forth in claim 10 wherein said second magnetoresistive readout sensor is an anisotropic mangnetoresistive sensor.

12. The magnetic head (12) as set forth in claim 9 or 10 wherein said readout sensor is a giant magnetoresisitve sensor.
